# EUROPÄISCHE PATENTSCHRIFT

(11) **EP 0 524 276 B1**
(45) Veröffentlichungstag und Bekanntmachung des Hinweises auf die Patenterteilung: **05.04.1995**
(21) Anmeldenummer: 92902849.6
(22) Anmeldetag: 23.01.1992
(51) Int. Cl.: B60T 8/50, B60T 8/42

(54) **HYDRAULISCHE BREMSANLAGE MIT BLOCKIERSCHUTZREGELUNG**
HYDRAULIC BRAKING SYSTEM WITH ANTI-LOCK CONTROL
SYSTEME HYDRAULIQUE DE FREINAGE A SYSTEME ANTIBLOQUEUR

(30) Priorität: 12.02.1991 DE 4104144
(43) Veröffentlichungstag der Anmeldung: 27.01.1993
(73) Patentinhaber: ITT Automotive Europe GmbH, 60488 Frankfurt (DE)
(72) Erfinder: MAAS, Joachim, D-6368 Bad Vilbel (DE); MICHAELIS, Klaus, D-6480 Wächtersbach (DE)
(86) Internationale Anmeldenummer: EP9200135
(87) Internationale Veröffentlichungsnummer: WO9213742

(56) Entgegenhaltungen:
- EP-A- 0 043 686
- GB-A- 2 109 069
- GB-A- 2 126 673
- GB-A- 2 183 763
- US-A- 4 618 189

## Beschreibung

Die Erfindung bezieht sich auf eine hydraulische Bremsanlage mit Blockierschutzregelung, insbesondere für Kraftfahrzeuge nach dem Oberbegriff des Anspruchs 1.

Eine derartige Bremsanlage ist bereits in der Patentanmeldung P 39 34 624, offenbart am 18.04.91, beschrieben. Hierbei handelt es sich um eine sogenannte geschlossene ABS-Anlage, die im Gegensatz zu dem bekannten offenen ABS-System keinen direkten Anschluß des Hilfsdruck- und Rücklaufsystem am hauptzylinderseitig angebrachten drucklosen Nachlaufbehälter aufweist. Das Hilfsdrucksystem entnimmt während der Bremsschlupfregelung dem an der Rücklaufleitung zur Pumpe angeordneten Niederdruckspeicher das erforderliche Druckmittelvolumen und fördert dieses in die Hauptdruckleitung. Gleichzeitig wird überschüssiges Druckmittel einem im Abzweig zur Hilfsdruckleitung angeordneten, einen Stufenkolben aufweisenden Hochdruckspeicher zugeführt, dessen Fortsatz zum Zwecke der Entkopplung des Hauptzylinders von der angeschlossenen Radbremse mit einem Ventilkörper zusammenwirkt. In Abhängigkeit von der elektromagnetischen Ansteuerung der in der Hauptdruckleitung und der Rücklaufleitung angeordneten Einlaß- und Auslaßventile erfolgt sodann die Blockierschutzregelung in den zugehörigen Radbremsen, während der Hauptzylinder durch den die Hauptdruckleitung verschließenden Ventilkörper von den geregelten Radbremsen getrennt ist.

Durch diesen Aufbau gestattet es die vorbeschriebene Bremsanlage nicht, möglichst kompaktbauend und damit unter Verzicht auf die in den Hauptdruckleitungen erforderlichen elektromagnetischen Einlaßventilen eine Bremsdruckregelung durchzuführen.

Aus der GB-A-2 126 673 ist eine hydraulische Bremsanlage mit Blockierschutzregelung hervorgegangen, die eine Druckmittelverbindung zwischen der Radbremse und dem elektrisch angesteuerten Auslaßventil ausschließlich in der vom Pumpendruck hervorgerufenen Rückstellbewegung des Stufenkolbens ermöglicht. Der Fortsatz des Stufenkolbens gibt sodann den zum Auslaßventil führenden Druckmittelkanal frei, während das Trennventil die Druckmittelverbindung zwischen dem Bremsdruckgeber und der Radbremse verschließt. Dies führt dazu, daß bei einem Ausfall der Hilfsdruckversorgung in der ABS-Druckabbauphase der Radbremsdruck nicht über das offene Auslaßventil zum Vorratsbehälter entweichen kann, da der Stufenkolben infolge der Druckfederwirkung den zum Auslaßventil führenden Druckmittelkanal versperrt.

Daher ist es die Aufgabe der Erfindung, eine Bremsanlage mit den vorbeschriebenen Merkmalen gemäß dem Oberbegriff des Anspruchs 1 derart zu verbessern, daß möglichst durch Minimierung des schaltungstechnischen, insbesondere steuerungselektrischen Grundaufbaus, auf das Erfordernis der den Radbremsen zugeordneten elektromagnetischen Einlaßventilen verzichtet werden kann, ohne Einbußen hinsichtlich des Pedalkomforts sowie der Funktionsfähigkeit der Bremsanlage bei Ausfall des Hilfsdruckversorgungssystems akzeptieren zu müssen.

Die Aufgabe wird erfindungsgemäß durch die kennzeichnenden Merkmale des Anspruchs 1 gelöst, wonach durch die Anordnung von definierten Drosselstellen im Bereich des Hilfsdruckspeichers eine permanente hydraulische Verbindung zwischen der Hilfsdruckpumpe, der Radbremse und dem elektromagnetischen Auslaßventil erfolgt. Durch die kompakte Anordnung der hydraulischen Steuerwege innerhalb des Hochdruckspeichers kann der erforderliche Elektronikanteil minimiert werden, ohne den Bedienungskomfort und die Funktionssicherheit der Anlage zu beeinträchtigen.

Die konkrete Ausgestaltung der Erfindung gemäß den Ansprüchen 2 und 3 sieht vor, den Stufenkolben und dessen Fortsatz im Gegensatz zu der bisher vorgesehenen Abdichtungsmaßnahme spielbehaftet in der gestuften Gehäusebohrung anzuordnen, so daß ein definierter Volumenstrom zwischen dem Hilfsdrucksystem und der Radbremse, sowie auch zum Auslaßventil gegeben ist. Damit kann im Zusammenwirken mit dem variabel pulsbaren Auslaßventil die Bremsdruckhaltephase nachgebildet werden, ohne eine zusätzliche elektromagnetische schaltbare Druckmittelverbindung zwischen dem Hilfsdrucksystem und der Radbremse anordnen zu müssen. Die drosselstromgeregelte Druckmittelverbindung kann konstruktiv über einen den Stufenkolben und dessen Fortsatz durchdringenden Verbindungskanal hergestellt werden.

Zur präzisen Führung des Stufenkolbens in der Gehäusebohrung und damit zur Einhaltung des erforderlichen Spaltmaßes zwischen dem Stufenkolben bzw. dem Fortsatz und der Gehäusebohrung sieht die Erfindung gemäß den Merkmalen des Anspruchs 4 vor, eine Gehäuseverengung vorzusehen, in der der Fortsatz geführt ist.

Weiterhin ist gemäß Anspruch 5 vorgesehen, daß der den Stufenkolben aufnehmende Gehäuseabschnitt sowohl mit einem vor und hinter dem Stufenkolben gelegenen Druckmittelanschluß jeweils eine Druckmittelverbindung zur Hilfsdruckpumpe aufweist, wobei der unter Wirkung einer Feder stehende Bereich des Gehäuseabschnittes mit einem in den Druckmittelanschluß eingesetzten, in Richtung der Hilfsdruckpumpe öffnenden Rückschlagventil versehen ist. Das in Richtung der Hilfsdruckpumpe öffnende Rückschlagventil sorgt nach Beendigung der Bremsdruckmodulation und damit auch bei stillstehender Hilfsdruckpumpe für eine rasche Druckabsenkung in dem die Feder mit dem Stufenkolben aufnehmenden Gehäuseabschnitt.

Nachfolgend soll anhand eines Ausführungsbeispieles die Funktion der blockiergeschützten Bremsanlage erläutert werden.

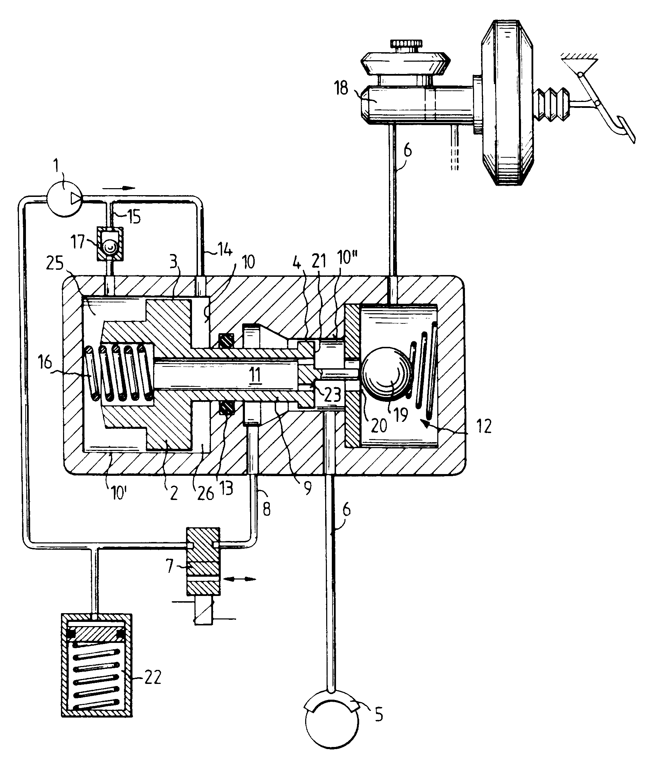

Gemäß Figur 1 besteht die Bremsanlage aus einem Bremsdruckgeber 18, der mit einer Hauptdruckleitung 6 an einem Trennventil 12 angeschlossen ist. Das Trennventil 12 ist Bestandteil einer gestuften Gehäusebohrung 10, die ferner einen Niederdruckspeicher 22, bestehend aus einem mit einem Fortsatz 9 versehenen Stufenkolben 2 aufnimmt. Das Trennventil 12 weist einen Ventilkörper 19 auf, der mittels einer Druckfeder den weiteren Durchfluß in der Hauptdruckleitung 6 in Richtung der Radbremse 5 steuert. Auf die Darstellung der übrigen Radbremsen einer in der Regel mehrkreisigen Bremsanlage wurde hinsichtlich der Analogie verzichtet. Der Ventilkörper 19 liegt in der Grundstellung durch die Wirkung der zugehörigen Feder 16 am Fortsatz 9 an, der sich bis in die Öffnung des dem Ventilkörper 19 zugeordneten Ventilsitzes 20 erstreckt. Damit ist eine ungehinderte Druckmittelverbindung zwischen dem Bremsdruckgeber 18 und der Radbremse 5 gewährleistet. Das Trennventil 12 verharrt geöffnet. Im Endbereich des Fortsatzes 9 befindet sich die das Auslaßventil 7 mit dem mittleren Gehäuseabschnitt 10'' verbindende Rücklaufleitung 8. Die dem Trennventil 12 nachgeschaltete Hauptdruckleitung 6 weist eine permanente hydraulische Verbindung zur Rücklaufleitung 8 auf, die zwecks Anordnung einer Drosselstelle 4 aus einem am Fortsatz 9 angeformten Bund 21 gebildet ist. Die Rücklaufleitung 8 nimmt in Reiheschaltung ein in der Grundstellung geschlossenes elektromagnetisches Auslaßventil 7 und eine Hilfsdruckpumpe 1 auf. Dazwischen befindet sich in einem Abzweig ein Niederdruckspeicher 22. Die Druckseite der Hilfsdruckpumpe 1 weist an dem den Stufenkolben 2 aufnehmenden Gehäuseabschnitt 10' zwei Druckmittelanschlüsse 14, 15 auf. Davon mündet jeweils ein Druckmittelanschluß 14, 15 vor und hinter dem Stufenkolben 2 in die Gehäusebohrung 10 ein. Auf der dem Fortsatz 9 abgewandten Stirnflächenseite des Stufenkolbens 2 bestimmt eine Feder 16 die Kolbenposition bei nichtaktivierter Hilfsdruckpumpe 1. Der die Feder 16 aufnehmende Gehäuseabschnitt 10' weist im Druckmittelanschluß 15 ein in Richtung der Hilfsdruckpumpe 1 öffnendes Rückschlagventil 17 auf. Zur Führung der Feder 16 ist der Stufenkolben 2 mit einer koaxialen Stufenbohrung versehen, die sich über nahezu die gesamte Länge des Fortsatzes 9 erstreckt. Der dem Trennventil 12 zugewandte Endbereich des im wesentlichen hohlzylinderförmigen Fortsatzes 9 ist zur Betätigung des Ventilkörpers 19 als Druckstift an den Bund 21 angeformt. Der Bund 21 weist mehrere axial verlaufende Bohrungen 23 auf, die eine Verbindung zwischen dem ersten und dem zweiten Gehäuseabschnitt 10', 10'' und der zur Radbremse 5 führenden Hauptdruckleitung 6 herstellt.

### Funktionsweise:

Die Abbildung zeigt alle vorbeschriebenen Teile der Bremsanlage in der Bremslösestellung. Die Bremslösestellung entspricht bis auf die in der Skizze nicht näher dargestellten Veränderungen hinsichtlich des Radzylinder- und des Bremsdruckgeberkolbens dem schlupffreien Normalbremsmodus. In der Bremslösestellung sorgt die im Hilfsdruckspeicher eingesetzte Feder 16 infolge ihrer hohen Federsteifigkeit für die Offenstellung des Trennventils 12, so daß ein ungehinderter Druckausgleich zwischen der Radbremse 5 und dem Bremsdruckgeber 18 erfolgen kann. Ursache hierfür ist die gegenüber der relativ schwächeren Druckfeder des Trennventils 17 entgegengesetzt wirkende größere Verstellkraft der im Hilfsdruckspeicher wirksamen Feder 16. Im schlupffreien Normalbremsmodus kann somit über die am offenen Trennventil 12 angeschlossene Hauptdruckleitung 6 ungehindert Bremsdruck der Radbremse 5 zugeführt werden.

Beim Erkennen von Bremsschlupfsignalen mittels der bereits prinzipiell bekannten und daher nicht näher erläuterten elektrischen Bremsschlupfsignalerfassungs- und Auswerteschaltung wird das elektromagnetische Auslaßventil 7 zum Zwecke der Druckabsenkung in der Radbremse 5 geöffnet. Dabei bestimmt die durch den Bund 21 am Fortsatz 9 gebildete Drosselstelle 4 den Druckabbaugradienten. Durch den sich am Stufenkolben 2 in Abhängigkeit der Stirnflächenverhältnisse einstellende Differenzdruck erfolgt im Sinne einer Entlastung des Ventilkörpers 19 eine Rückstellbewegung des Stufenkolbens 2. Das Trennventil 12 schließt unter Einwirkung der zugehörigen Druckfeder die den Bremsdruckgeber 18 mit der Radbremse 5 verbindende Hauptdruckleitung 6. Die Druckhaltephase wird sodann in Abhängigkeit von der Schaltfrequenz des Auslaßventils 7 und des von der Hilfsdruckpumpe über die Drosselstellen 3, 4 am Stufenkolben 2 und dem Fortsatz 9 geförderten Volumenstrom nachgebildet. Dabei bleibt infolge der am Stufenkolben 2 wirksamen Stirnflächenund damit Druckdifferenz das Trennventil 12 geschlossen, womit eine hydraulische Rückwirkung auf den Bremsdruckgeber 18 verhindert wird. Das Bremspedal verharrt komfortbetont ruhig.

Die Druckaufbauphase während der Blockierdruckregelung stellt sich nach dem Schließen des Auslaßventils 7 ein, indem die Hilfsdruckpumpe 1 zunächst das Druckmittel in den Ringraum 26, d.h. zwischen Stirnringfläche des Stufenkolbens und der begrenzenden Gehäusebohrung des Hilfsdruckspeichers fördert. Durch die Dimensionierung der hydraulisch beaufschlagbaren Stirnflächen bleibt der Stufenkolben 2 entgegen der Wirkung der zugeordneten Feder 16 in einer hydraulisch vorgespannten Stellung auf Federanschlag, während gleichzeitig die durch den radialen Abstand zwischen der Mantelfläche des Stufenkolbens 2 und der Gehäusewand gebildete Drosselstelle 3 einen definierten Volumenstrom in den Federraum 25 und damit anschließend in die Längsbohrung des Fortsatzes 9 zuläßt, um einen gezielten Druckaufbaugradienten in der Radbremse 5 zu realisieren. Nach dem Passieren der im Bund 21 angeordneten Bohrung 23 ist die ungehinderte hydraulische Verbindung zur radbremsseitigen Hauptdruckleitung 6 hergestellt. Ebenso gelangt ein Teilstrom über die Drosselstelle 4 des Bundes 21 bis zum in der Rücklaufleitung 8 eingesetzten Auslaßventil 7, das beim erneuten Einleiten der Druckabbauphase den Niederdruckspeicher 22 auffüllt. Der vorgespannte Niederdruckspeicher 22 entlädt sich, sobald die Hilfsdruckpumpe 1 anläuft.

Beim Ausfall des Hilfsdruckversorgungssystem gelangt der Fortsatz 9 unter Einwirkung der am Stufenkolben 2 vorgespannten Feder 16 erneut zur Anlage am Ventilkörper 19. Die am Stufenkolben 2 und am Bund 21 vorgesehenen Drosselstellen 3,4 begünstigen dabei die Hubbewegung des Kolbens. Das Trennventil 12 wird durch den Fortsatz 9 geöffnet, wodurch manuell Druckmittel vom Bremsdruckgeber 18 zur Radbremse 5 gefördert werden kann.

Zur besseren Überschaubarkeit der Funktionsweise der Bremsanlage wurde lediglich die Schaltung für eine Radbremse dargestellt. Weitere vorteilhafte Ausführungsmöglichkeiten zum Erfindungsgedanken ergeben sich beispielsweise durch Verlagerung der vorbeschriebenen Drosselstellen in den Bereich der Stirnfläche des Stufenkolbens, die den Stufenkolben im wesentlichen axial durchdringen können. Ebenso ist es möglich die Drosselstellen als im wesentlichen den Stufenkolben und/oder den Fortsatz radial durchdringende Drosselbohrungen auszuführen. Dabei stellt das beanspruchte Ausführungsbeispiel eine besonders vorteilhafte Lösung des Problems dar. Weitere Ausführungsmöglichkeiten sind denkbar, ohne einen gesonderten Anspruch auf detaillierte Darstellungen stellen zu können.

### Bezugszeichenliste

- 1: Hilfsdruckpumpe
- 2: Stufenkolben
- 3: Drosselstelle
- 4: Drosselstelle
- 5: Radbremsen
- 6: Hauptdruckleitung
- 7: Auslaßventil
- 8: Rücklaufleitung
- 9: Fortsatz
- 10: Gehäusebohrung
- 10': Gehäuseabschnitt
- 10'': Gehäuseabschnitt
- 11: Druckmittelkanal
- 12: Trennventil
- 13: Ringdichtung
- 14: Druckmittelanschluß
- 15: Druckmittelanschluß
- 16: Feder
- 17: Rückschlagventil
- 18: Bremsdruckgeber
- 19: Ventilkörper
- 20: Ventilsitz
- 21: Bund
- 22: Niederdruckspeicher
- 23: Bohrungen
- 25: Federraum
- 26: Ringraum

## Patentansprüche

1. Hydraulische Bremsanlage mit Blockierschutzregelung, insbesondere für Kraftfahrzeuge, mit einem Bremsdruckgeber (18), mindestens einer Radbremse (5), einer Hilfsdruckpumpe (1), einem Druckspeichersystem, sowie mit wenigstens einem Auslaßventil (7) zum Regeln des Bremsdruckes und einem Trennventil (12) zum Absperren des Bremsdruckgebers (18) von der Radbremse (5), wobei in eine Hauptdruckleitung (6), die den Bremsdruckgeber (18) mit der Radbremse (5) verbindet, das Trenn- und das Einlaßventil (12) eingesetzt sind und in die Rücklaufleitung (8), welche die Radbremse (5) mit einem Niederdruckspeicher (22) verbindet, das Auslaßventil (7) eingefügt ist, wobei die Hilfsdruckpumpe (1) Druckmittel aus dem Niederdruckspeicher (22) entnimmt und wobei ein in einer entsprechend gestuften Gehäusebohrung (10) geführter, mit einem Fortsatz (9) behafteter Stufenkolben (2) derart mit dem Trennventil (12) zusammenwirkt, daß der Fortsatz (9) die Druckmittelverbindung zwischen dem Bremsdruckgeber (18) und der Radbremse (5) zu steuern vermag, dadurch **gekennzeichnet**, daß der von der Hilfsdruckpumpe (1) beaufschlagte Stufenkolben (2) eine mit definierten Drosselstellen (3,4) versehene hydraulische Verbindung aufnimmt, die zur an der Radbremse (5) angeschlossenen Hauptdruckleitung (6) und zur das Auslaßventil (7) aufweisenden Rücklaufleitung (8) führt, und daß durch die Drosselstellen (3,4) eine permanente hydraulische Verbindung zwischen der Hilfsdruckpumpe (1), der Radbremse (5) und dem Auslaßventil (7) hergestellt ist.

2. Hydraulische Bremsanlage mit Blockierschutzregelung nach Anspruch 1, dadurch **gekennzeichnet**, daß zur Ausbildung der Drosselstellen (3, 4) der Stufenkolben (2) und dessen Fortsatz (9) gegenüber der gestuften Gehäusebohrung (10) ein definiertes Spaltmaß aufweisen.

3. Hydraulische Bremsanlage mit Blockierschutzregelung nach Anspruch 1 oder 2, dadurch **gekennzeichnet**, daß der Stufenkolben (2) und dessen Fortsatz (9) zumindest von einem Druckmittelkanal (11) im wesentlich axial durchdrungen sind, so daß eine hydraulische Verbindung zwischen dem von der Hilfsdruckpumpe (1) beaufschlagten, den Stufenkolben (2) aufnehmenden Gehäuseabschnitt (10') und zu einem an das Trennventil (12) angrenzenden weiteren Gehäuseabschnitt (10'') besteht.

4. Hydraulische Bremsanlage mit Blockierschutzregelung nach mindestens einem der vorhergehenden Ansprüche, dadurch **gekennzeichnet**, daß zwischen den beiden Gehäuseabschnitten (10', 10'') eine Gehäuseverengung vorgesehen ist, die eine am Fortsatz (9) anliegende Ringdichtung (13) aufnimmt.

5. Hydraulische Bremsanlage mit Blockierschutzregelung nach mindestens einem der vorhergehenden Ansprüche 1 bis 4, dadurch **gekennzeichnet**, daß der den Stufenkolben (2) aufnehmende Gehäuseabschnitt (10') sowohl mit einem vor und hinter dem Stufenkolben (2) gelegenen Druckmittelanschluß (14,15) jeweils eine Druckmittelverbindung zur Hilfsdruckpumpe (1) aufweist und daß der unter Wirkung einer Feder (16) stehende Bereich des Gehäuseabschnittes (10') mit einem in den Druckmittelanschluß (15) eingesetzten, in Richtung der Hilfsdruckpumpe (1) öffnenden Rückschlagventil (17) versehen ist.

## Claims

1. A hydraulic brake system with anti-lock control, in particular for automotive vehicles, comprising a braking pressure generator (18), at least one wheel brake (5), an auxiliary-pressure pump (1), a pressure accumulator system, as well as at least one outlet valve (7) for controlling the braking pressure and a shut-off valve (12) for isolating the braking pressure generator (18) from the wheel brake (5), the shut-off valve and inlet valve (12) being inserted into a main pressure line (6) interconnecting the braking pressure generator (18) and the wheel brake (5), while the outlet valve (7) is inserted into the return line (8) interconnecting the wheel brake (5) and a low-pressure accumulator (22), wherein the auxiliary-pressure pump (1) takes pressure fluid from the low-pressure accumulator (22), and wherein a stepped piston (2) guided in a correspondingly stepped housing bore (10) and furnished with an extension (9) cooperates with the shut-off valve (12) such as to enable the extension (9) to govern the pressure-fluid connection between the braking pressure generator (18) and the wheel brake (5),
**characterized** in that the stepped piston (2) acted upon by the auxiliary-pressure pump (1) accommodates a hydraulic connection which is provided with defined restrictors (3, 4) and which leads to the main pressure line (6) communicating with the wheel brake (5) and to the return line (8) including the outlet valve (7), and in that a permanent hydraulic connection is established, through the restrictors (3, 4), between the auxiliary-pressure pump (1), the wheel brake (5) and the outlet valve (7).

2. A hydraulic brake system with anti-lock control as claimed in claim 1,
**characterized** in that, for forming the restrictors (3, 4), the stepped piston (2) and its extension (9) have a defined slot dimension in relation to the stepped housing bore (10).

3. A hydraulic brake system with anti-lock control as claimed in claim 1 or claim 2,
**characterized** in that the stepped piston (2) and its extension (9) are penetrated substantially in axial direction by at least one pressure-fluid channel (11) so that a hydraulic connection is constituted between the housing portion (10') acted upon by the auxiliary-pressure pump (1) and accommodating the stepped piston (2) and another housing portion (10'') adjacent to the shut-off valve (12).

4. A hydraulic brake system with anti-lock control as claimed in at least any one of the preceding claims,
**characterized** in that a housing constriction is provided between the two housing portions (10', 10'') and receives an annular seal (13) abutting on the extension (9).

5. A hydraulic brake system with anti-lock control as claimed in at least any one of the preceding claims 1 to 4,
**characterized** in that the housing portion (10') accommodating the stepped piston (2), with one pressure fluid port (14, 15) in front of and one pressure fluid port behind the stepped piston (2), has each one pressure-fluid connection to the auxiliary-pressure pump (1), and in that the area of the housing portion (10') being under the effect of a spring (16) is provided with a non-return valve (17) inserted into the pressure-fluid port (15) and opening in the direction of the auxiliary-pressure pump (1).

## Revendications

1. Système hydraulique de freinage à régulation anti-blocage des roues, notamment pour véhicules automobiles, comprenant un maître-cylindre de frein (18), au moins un frein de roue (5), une pompe de pression auxiliaire (1), un système d'accumulateur de pression, ainsi qu'au moins une soupape d'échappement (7) destinée à réguler la pression de freinage et un clapet d'isolement (12) destiné à isoler le maître-cylindre de frein (18) du frein de roue (5), le clapet d'isolement (12) et la soupape d'admission étant installés dans une conduite de pression principale (6) qui relie le maître-cylindre de frein (18) au frein de roue (5), et la soupape d'échappement (7) étant installée dans une conduite de retour (8) qui relie le frein de roue (5) à un accumulateur basse pression (22), la pompe de pression auxiliaire (1) puisant du fluide de pression dans l'accumulateur basse pression (22), et un piston étagé (2) guidé dans un alésage étagé correspondant (10) ménagé dans le boîtier, comportant un prolongement (9), coopérant avec le clapet d'isolement (12) de manière telle que le prolongement (9) puisse commander la communication de fluide de pression entre le maître-cylindre de frein (18) et le frein de roue (5), caractérisé en ce que le piston étagé (2) soumis à l'action de la pompe de pression auxiliaire (1) reçoit une communication hydraulique pourvue d'étranglements définis (3, 4), communiquant avec la conduite de pression principale (6) reliée au frein de roue et la conduite de retour (8) comportant la soupape d'échappement (7), et en ce que les étranglements (3, 4) établissent une communication hydraulique permanente entre la pompe de pression auxiliaire (1), le frein de roue (5) et la soupape d'échappement (7).

2. Système de freinage hydraulique à régulation anti-blocage des roues selon la revendication 1, caractérisé en ce que le piston étagé (2) et le prolongement (9) de celui-ci présentent un jeu prédéfini par rapport à l'alésage (10) du boîtier, de manière à former les étranglements (3, 4).

3. Système de freinage hydraulique à régulation anti-blocage des roues selon la revendication 1 ou 2, caractérisé en ce qu'au moins un canal (11) de fluide de pression traverse essentiellement axialement le piston étagé (2) et le prolongement (9) de celui-ci, de manière qu'une communication hydraulique soit établie entre la section (10') du boîtier, qui est soumise à l'action de la pompe de pression auxiliaire (1) et reçoit le piston étagé (2), et une autre section (10'') du boîtier, qui est adjacente au clapet d'isolement (12).

4. Système de freinage hydraulique à régulation anti-blocage des roues selon l'une au moins des revendications précédentes, caractérisé en ce qu'un resserrement du boîtier est prévu entre les deux sections (10', 10'') du boitier et reçoit un joint torique (13) s'appuyant sur la collerette (9).

5. Système de freinage hydraulique à régulation anti-blocage des roues selon l'une au moins des revendications précédentes 1 à 4, caractérisé en ce que la section (10') du boîtier, qui reçoit le piston étagé (2) comporte une communication de fluide de pression reliant des raccords de fluide de pression (14, 15) respectivement situés à la fois en amont et en aval du piston étagé (2) à la pompe de pression auxiliaire (1), et en ce que la zone de la section (10') du boîtier, qui est soumise à l'action du ressort (16), est pourvue d'un clapet de non-retour (17) installé dans le raccord (15) de fluide de pression, s'ouvrant en direction de la pompe de pression auxiliaire (1).
